# EUROPÄISCHE PATENTANMELDUNG

(11) **EP 1 258 822 A2**
(43) Veröffentlichungstag der Anmeldung: **20.11.2002**
(21) Anmeldenummer: 02010054.1
(22) Anmeldetag: 06.05.2002
(51) Int. Cl.: G06F 17/60

(54) **Aktenmanagementsystem**

(30) Priorität: 11.05.2001 DE 10122958
(71) Anmelder: Knöllinger, Sigrid, 56410 Montabaur (DE)
(72) Erfinder: Knöllinger, Kurt, 56410 Montabaur (DE)
(74) Vertreter: Zimmermann & Partner

(57) **Zusammenfassung**

Es wird eine Vorrichtung zur computergestützten Änderung eines Lagerortes einer Akte 3 in einem Lagerort 101-104 vorgestellt. Dabei werden maschinell lesbare Identifizierungen 1 für Akten und für Lagerorte verwendet. Das Lesegerät 5 zum maschinellen Lesen der Identifizierungen überträgt die Informationen an eine computergestützte Datenbank, in der die Akte 3 dem Lagerort 101-104 zugeordnet wird. In der Datenbank kann anhand von Suchmerkmalen nach der Akte gesucht werden, wobei als Ergebnis der Suche der aktuelle Lagerort angegeben wird.

## Beschreibung

Die Erfindung bezieht sich auf ein Verfahren zur Organisation von Aktenbeständen, insbesondere zur Lagerung und zum Transport von Akten.

In vielen Unternehmen fallen durch Korrespondenz mit Kunden oder durch Formulare eine Vielzahl von Unterlagen und Dokumenten an. Diese Unterlagen oder Dokumente werden in der Regel in Einheiten unterschiedlicher Größe in Akten einsortiert. Im Falle geringerer Aktenbestände ist es möglich, durch dezentrales Lagern bei dem jeweiligen Sachbearbeiter, die Aktenbestände überschaubar zu halten. Z.B. in Versicherungen und großen Bankhäusern aber auch in Kanzleien und Ämtern ist die Zahl der zu verwaltenden Akten zu groß, um die Organisation der Aktenbestände durch die Lagerung bei den Sachbearbeitern zu lösen. Die große Zahl von Akten ist u.a. dadurch bedingt, daß für viele derartige Dokumente eine gesetzliche vorgeschriebene Zeit der Lagerhaltung existiert.

In manchen Unternehmen werden daher Dokumente und Schriftstücke vor allem für den täglichen Gebrauch digitalisiert. Den Mitarbeitern sind die Dokumente und Schriftstücke über einen PC oder ein Terminal digital zugänglich. Dieses Verfahren hat jedoch den Nachteil, daß die Lagerung der Dokumente in Papierform, wie sie gesetzlich vorgeschrieben ist, nicht gelöst, sondern nur umgangen wird. In der Tat führen die Systeme zur digitalen Aktenverwaltung dazu, daß eine systematische Lagerhaltung der Dokumente in Papierform eher vernachlässigt wird, da auf die Dokumente für den Alltagsgebrauch auch digital zugegriffen werden kann.
Für kleinere Unternehmen mit einer großen Zahl von Akten ist es darüber hinaus möglich, daß sich eine digitale Verwaltung der Dokumente und Unterlagen aus wirtschaftlichen Gesichtspunkten nicht lohnt. Dennoch muß auch in solchen kleineren Unternehmen auf die Unterlagen und Schriftstücke regelmäßig zugegriffen werden.

Es existieren Systeme, um Akten in Papierform automatisiert zu suchen. Hierzu werden die Akten mit einem Transponder ausgestattet. Die Transponder enthalten einen Code, der die Akte eindeutig kennzeichnet. Die Lagerorte wie Tische oder Schränke werden mit einem Lesegerät für diese Transponder versehen. Wird nun eine Suche für eine Akte gestartet, werden alle Transponder-Lesegeräte aktiviert und suchen, ob sich eine Akte mit dem entsprechenden Transponder-Code in der Nähe des Suchradius des Lesegeräts befindet. Diese Systeme werden zum Teil dadurch unterstützt, daß innerhalb eines Raumes eine schwenkbare Kamera installiert wird. Die Akten werden hierfür zusätzlich mit einem Piktogramm versehen, das von der Kamera erkannt werden kann. Auch die Kameras werden bei der Suche nach einer Akte aktiviert und suchen das der Kamera zugängliche Umfeld nach der entsprechenden Akte automatisch ab. Der Lagerort wird im Falle einer erfolgreichen Suche dem Suchenden gemeldet.

Der Nachteil dieser Systeme besteht u.a. darin, daß die Akten oder Dokumente von den Transponder-Lesegeräten oder Kameras gesucht werden müssen. Da die derzeit verwendeten Transponder-Lesegeräte lediglich eine Reichweite von ca. 30 cm besitzen, können nur Akten oder Dokumente aufgefunden werden, die sich in unmittelbarer Nähre des Lesegeräts befinden. Liegt zum Beispiel eine Akte oder ein Dokument auf einem beliebigen Platz auf einem Schreibtisch, wird sie nicht zwangsläufig gerunden, wenn der Schreibtisch mit einem Lesegerät ausgestattet ist, da. die Reichweite des Transponder-Lesegerätes mit ca. 30 cm nicht ausreicht, um den Bereich des gesamten Schreibtischs zu erfassen. Die Unterstützung dieser Systeme durch die oben beschriebenen Kameras kann das Problem nicht auffindbarer Akten nur zum Teil lösen. Auf der einen Seite unterliegt die optische Erkennung nicht der Einschränkungen eines maximalen Abstandes von ca. 30 cm zwischen der Akte und dem Ort des Lesegerätes. Auf der anderen Seite versagt aber das optische Kamerasystem, wenn z.B. eine Akte durch ein anderes Schriftstück überdeckt wird, so daß das Piktogramm für die Kamera nicht zu erkennen ist.

Ausgehend vom genannten Stand der Technik, liegt der vorliegenden Erfindung die Aufgabe zu Grunde eine Vorrichtung und ein Verfahren für die Aktenlagerung zur Verfügung zu stellen, daß die beschriebenen Schwierigkeiten nicht aufweist. Dabei sollte das Verfahren auf die unterschiedlichen Anforderungen von Unternehmen angepaßt werden können und daher eine große Flexibilität aufweisen. Durch die Tatsache, daß sowohl mittelständische Unternehmen als auch große Konzerne sich dem Problem der Aktenverwaltung stellen müssen, sollte das Verfahren gut skalierbar sein und aus wirtschaftlichen Gesichtspunkten bezüglich der Anzahl der Akten zu degressiven Kosten führen.

Die obenstehenden Probleme des Standes der Technik werden gelöst durch erfindungsgemäße Vorrichtungen nach den Ansprüchen 1 und 10 sowie einem erfindungsgemäßen Verfahren nach Anspruch 12.

Die Aufgabe wird gemäß einem ersten Aspekt der Erfindung durch eine systematische Dokumentation der Lagerorte einer Akte in einem Lagersystem gelöst. Hierfür wird ein auf der Akte aufgebrachtes Identifizierungsmerkmal verwendet. Diese Akten-Identifizierung ist von einem Lesegerät maschinell lesbar. Eine bevorzugt durch dasselbe Lesegerät lesbare Identifizierung des Lagerortes erlaubt die direkte Verknüpfung einer Akte mit einem neuen Lagerort. Das Lesegerät für die Identifizierungen überträgt die Daten mittels Datenfunk an eine computergestütze Datenbank. Die Verknüpfung der Akte mit dem Lagerort ist einem Benutzer bevorzugt durch eine Suche in der Datenbank zugänglich.

Die Lösung beruht darauf den Lagerort fortwährend mit Hilfe logistischer Methoden in der Datenbank zu dokumentieren. Als Akte wird in diesem Zusammenhang eine Zusammenfassung von Dokumenten, Schriftstücken und/oder Informationsträgern verstanden, wobei die Anzahl der Teile einer Akte auch eins sein kann und mehrere Akten wiederum zu einer Akte zusammengefaßt werden können, um z.B. einen Transport oder eine Lagerung zu vereinfachen.

Bevorzugte Ausführungen und besondere Aspekte der Erfindung zur computergestützen Dokumentation einer Änderung eines Lagerortes einer Akte ergeben sich aus den Unteransprüchen.

Bevorzugt ist das Lesegerät mobil. Dadurch kann das Lesegerät einen Transport begleiten und es können mehr Lagerorte als Lesegeräte mit der Vorrichtung verwaltet werden.

Es ist weiterhin vorteilhaft, wenn das Verlassen des ersten Lagerorts dokumentiert wird, indem die Identifizierung des ersten Lagerorts und der Akte mit dem mobilen Lesegerät eingelesen wird. Dadurch wird nicht nur, wie oben beschrieben, dokumentiert, daß eine Akte A1 an einen neuen, zweiten Lagerort L2 gelangt, sondern es wird auch dokumentiert, daß die Akte von dem alten, also dem ersten Lagerort L1 entfernt wird.

Bevorzugt wird beim Einlesen der Akten-Identifizierung und/oder der Lagerort-Identifizierung ein Zeitcode für den Zeitpunkt des Einlesens beigefügt, sowie anhand einer Benutzer-Identifizierung ein Benutzer durch das Lesegerät zu erkannt. Diese Informationen können alle oder teilweise dazu genutzt werden den Transportvorgang der Akte zu erkennen und zu spezifizieren. Der Daten des Transports können somit in die Datenbank eingetragen werden. Dabei spielt es zunächst keine Rolle, ob nur dem zweiten Lagerort L2 oder dem ersten und dem zweiten Lagerort (L1 und L2) ein Zeitcode beigefügt wird. Lediglich für die genauen Transportzeiten ist eine Eingabe von beiden Lagerorten erforderlich.

### Weiterhin werden folgende Aspekte bevorzugt:

Es ist von Vorteil, wenn das Lesegerät einen Fehler erkennt. Ein Fehler kann sowohl durch eine Fehlbedienung als auch z.B. durch einen fehlerhaften Lesevorgang entstehen. Insbesondere ist es zu bevorzugen, wenn das Lesegerät nach dem Erkennen des Fehlers ein fehlerspezifisches Signal ausgibt und/oder eine fehlerspezifische Meldung anzeigt. Insbesondere ist es vorteilhaft, wenn das Lesegerät nach dem Fehler weitere Arbeiten mit dem Lesegerät erst nach einer Korrektur und/oder Quittierung der Fehleingabe zuläßt.

Um die Möglichkeit von Fehlern weiter zu reduzieren wird der Datenfunk bevorzugt bidirektional aufgebaut. Bei einem bidirektionalen Datenfunk kann an das mobile Lesegerät ein spezifisches Signal zurückgesendet werden, falls der Eintrag in die Datenbank fehlerfrei erledigt wurde oder ein Fehler einer bestimmten Art aufgetreten ist. Dadurch kann verhindert werden, daß ein Paar aus Akten-Identifizierung und Lagerort-Identifizierung zwar richtig gelesen wird, aber bei der Übermittlung an den Computer oder beim Eintrag in die Datenbank ein Fehler auftritt, der von dem Benutzer nicht bemerkt wird.

Es ist von Vorteil, einen Lagerort unterschiedlich genau zu beschreiben. Der Grad der Detaillierung der Beschreibung des Lagerortes baut dabei eine Hierarchie auf. Bevorzugt wird die Hierarchie durch einen mindestens vierstufigen Detailierungsgrad aufgebaut. Ist der Datenbank zur Verwaltung der Akten die Hierarchie bekannt, so kann die Datenbank flexibel auf die jeweiligen Lesevorgänge der Lagerort-Identifizierungen reagieren, indem sie einen speziellen Lagerort innerhalb eines allgemeinen Lagerortes in der Datenbank vermerkt und redundante Informationen unterdrückt.

Es ist vorteilhaft, wenn die Datenbank erweiterbar ist, indem sowohl neue Akten als auch neue Lagerorte in die Lagerortverwaltung aufgenommen werden können. Um beispielsweise eine neue Akte der Lagerverwaltung aufzunehmen, wird sie mit einer neuen Akten-Identifizierung markiert. Zusätzlich wird in der Datenbank neben der Akten-Identifizierung ein aktenspezifisches Suchmerkmal für die Datenbank und der derzeitige Lagerort eingegeben. Unter Suchmerkmalen versteht man beispielweise Akten-Nummern, Kunden-Nummern, Kunden-Namen, Sachbearbeiter, Erstellungsdaten der Akte oder ähnliche Merkmale, die ein Benutzer bei einer Suche in der Datenbank verwenden kann. Dabei kann der Benutzer im Rahmen einer Suche in der Datenbank auch ein Lagerort als Suchmerkmal verwenden, um ausschließlich Akten mit einem bestimmten Lagerort als Suchergebnis zu erhalten. Bevorzugt kann hierzu die der Datenbank bekannten Hierarchie des Detaillierungsgrades der Lagerorte genutzt werden. Nachdem diese Einträge in der Datenbank vorhanden sind, kann der Transport der neuen Akte dokumentiert werden.

Insbesondere ist es bevorzugt, wenn das Suchmerkmal für die Datenbank erweiterbar ist. Auf diese Weise können zusätzliche Suchmerkmale in die Datenbank eingegeben werden, um die Suche in der Datenbank zu erleichtern.

Weiterhin ist es bei einer durch eine Datenbank gestützte Suche nach Akten von Vorteil, wenn die Datenbank alle Akten mit den jeweiligen Lagerorten als gefundene Akten nennt, die durch die eingegebenen Suchmerkmale beschrieben werden.

Ausführungsbeispiele der Erfindung sind in den Figuren dargestellt, und werden im folgenden näher beschrieben.

### Es zeigen:

- Fig 1.: eine Skizze einer Umgebung mit unterschiedlichen Lagerorten und den Lagerort-Identifizierungen, in der eine Akte mit Akten-Identifizierung gelagert wird,
- Fig 2.: ein Ablaufdiagramm für die Anmeldung eines Benutzers an das Lesegerät,
- Fig 3.: ein Ablaufdiagramm eines Lesevorgangs eines Lagerortes und einer Akte,
- Fig 4.: ein Ablaufdiagramm eines Transportvorgangs, bei dem am ersten Lagerort und am zweiten Lagerort die Akte dem Lagerort zugeordnet wird,
- Fig 5.: ein Ablaufdiagramm, bei dem zusätzliche eine Überprüfung auf Fehlbedienung stattfindet,
- Fig 6.: ein Ablaufdiagramm für das Aufnehmen neuer Akten in die Datenbank,
- Fig 7.: ein Ablaufdiagramm für die Suche eines Eintrags einer Akte in der Datenbank; und
- Fig 8.: eine Skizze für die automatische Dokumentation der Änderung eines Lagerortes beim Betreten von Räumen.

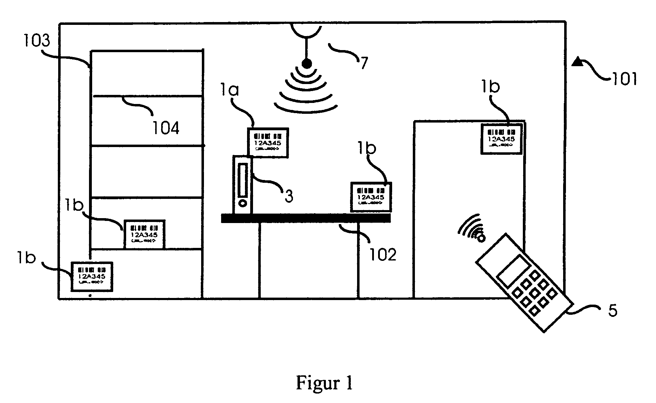

Figur 1 zeigt eine Skizze zur näheren Erläuterung des Prinzips der computergestützen Dokumentation einer Änderung eines Lagerortes einer Akte in einem Lagersystem. Die Skizze zeigt einen Raum 101 mit dessen Lagerort-Identifizierung 1b, sowie einen Tisch 102 und ein Regal 103 mit Regalfächern 104 mit ebenfalls jeweils einer Lagerort-Identifizierung 1b. Darüber hinaus ist eine Akte 3 mit einer Akten-Identifizierung 1a und ein Lesegerät 5 zu sehen, das die Daten mittels Datenfunk 7 an einen Computer (nicht dargestellt) überträgt.

Der Begriff Lagerort 101, 102, 103 oder 104 bedeutet dabei nicht, daß die Akte an diesem Ort ausschließlich zur Lagerung aufbewahrt wird. Als Akte 3 wird in diesem Zusammenhang eine Zusammenfassung von Dokumenten, Schriftstücken und/oder Informationsträgern verstanden, wobei die Anzahl der Teile einer Akte auch eins sein kann oder mehrere Akten 3 wiederum zu einer Akte 3 zusammengefaßt werden können. Beispielsweise können mehrere Akten in einem Karton verstaut und dieser Karton mit einer Akten-Identifizierung versehen werden. Selbst ein Container für einen längeren Transport kann beispielsweise, falls dies für das Auffinden einer Akte zweckmäßig ist, vorübergehend als Akte gekennzeichnet werden.

Um in der Datenbank zu speichern, daß die Akte 3 in einem Raum 101 aufbewahrt wird, liest man beim Transport der Akte in den Raum 101 mit dem Lesegerät 5 sowohl die Lagerort-Identifizierung 1b des Raumes 101 als auch die Akten-Identifizierung 1a. Das Lesegerät überträgt die Identifizierung mit Hilfe von Datenfunk 7 an einen Computer. Dort wird in der Datenbank gespeichert, daß sich die Akte mit der Akten-Identifizierung 1a in dem Raum 101 mit der Lagerort-Identifizierung 1b befindet.

Damit diese Dokumentation schnell und fehlerfrei erfaßt werden kann, werden die Akten mit maschinell lesbaren Akten-Identifizierungen 1a versehen, vorzugsweise optisch oder elektromagnetisch lesbaren Identifizierungen, insbesondere Barcodes. Für die Lagerorte existieren Lagerort-Identifizierungen 1b, die bevorzugt mit demselben Lesegerät 5 lesbar sind. Vorzugsweise sind die Lagerort-Identifizierungen, analog der Anbringung einer Akten-Identifizierungen auf der Akte, direkt am Lagerort angebracht. Die Lagerort-Identifizierungen können aber auch in einer beim Transport mitgeführten Liste verfügbar sein. Das Lesegerät für die Identifizierungen, nämlich den Akten-Identifizierungen und den Lagerort-Identifizierungen, ist bevorzugt mobil und sowohl mit einer Lesevorrichtung für die Identifizierungen, als auch mit einem Datenfunkgerät ausgestattet, das die eingelesenen Daten an einen Computer überträgt.

Wird eine Akte A1 an einen neuen, zweiten Lagerort L2 transportiert, kann dort durch einfaches und schnelles Lesen der Akten-Identifizierungen von A1 und der Lagerort-Identifizierungen von L2 eine Zuordnung erzeugt werden, so daß die mit Hilfe von Datenfunk an einen Computer übertragenen Daten in eine Datenbank eingetragen werden. Dabei wird die Akte A1 innerhalb der Datenbank dem Lagerort L2 zugeordnet.

Dadurch ist in der Datenbank die Information zugänglich an welchem Lagerort sich die Akte befindet.

Reicht es nicht aus, den Lagerort durch einen Raum zu beschreiben, so kann der Lagerort auch durch einen verfeinerten Detaillierungsgrad beschrieben werden. Bevorzugt ist der Detaillierungsgrad mindestens vierstufig. Für einen verfeinerten Detaillierungsgrad wird eine Lagerort-Identifizierung einem Tisch 102 oder einem Regal 103 innerhalb des Raumes 101 zugeordnet. Wird die entsprechende Lagerort-Identifizierung 1b für den Tisch 102 oder das Regal 103 in Zusammenhang mit der Akten-Identifizierung 1a gelesen, so kann die Datenbank anhand der ihr bekannten Hierarchie der Lagerorte erkennen, daß sich die Akte in einem Raum 101 aufhält und innerhalb des Raumes darüber hinaus aber an dem Ort mit der soeben gelesenen Lagerort- Identifizierung.

Es ist dabei zunächst unerheblich ob ein Lagerort durch ein Gebäude, ein Stockwerk, einen Raum, einen Schrank, eine Kiste, einen Tisch oder ein Fach 104 innerhalb eines Schrankes gegeben ist. Ein Lagerort kann dabei sogar durch ein Transportmittel oder eine Person gegeben sein. Es liegt vollkommen in der Hand des Benutzers, für seinen Zweck die Lagerorte so genau zu definieren, daß er die Akten jederzeit in einer ihm vorgegebenen Zeit finden kann. Dabei muß er sich bei der Suche nur auf den Lagerort beschränken. Daher kann davon ausgegangen werden, daß, im Rahmen der vom Benutzer geforderten Genauigkeit, der Lagerort bekannt ist.

Bei einer Kennzeichnung von Akten und Lagerorten durch die oben beschriebenen Identifizierungen besteht folgender Vorteil. Die Identifizierungen für Lagerorte und Akten sind kostengünstig. Daher kann eine große Anzahl von Akten in dem Lagersystem verwaltet werde, ohne dadurch die Gesamtkosten des Lagersystems wesentlich zu erhöhen.
Darüber hinaus zeichnet sich die Erfindung durch den einfachen Lesevorgang aus, vergleichbar mit dem Lesen eines Barcodes an einer Registrierkasse im Supermarkt. Es wird dadurch eine Benutzung gewährleistet, die sowohl sicher und komfortabel als auch automatisierbar ist.

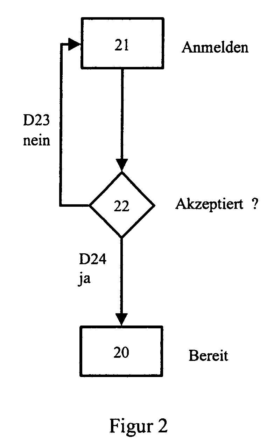

Figur 2 zeigt ein Beispiel für den Ablauf einer Anmeldung eines Benutzers an dem Lesegerät. Die Anmeldung kann durch einen allgemeinen Autorisierungscode oder durch eine benutzerspezifische Autorisierungscode geschehen. Nach Eingabe des Codes durch den Benutzer in Schritt 21 wird im Falle des allgemeinen Autorisierungscodes lediglich überprüft 22, ob der Benutzer befugt ist, das Lesegerät zu verwenden. Im Falle des benutzerspezifischen Autorisierungscodes kann zusätzlich die Identität des Benutzers in der Datenbank zusammen mit den Lesevorgängen gespeichert werden, die von ihm durchgeführt wurden. Eine Prüfüng der Anmeldung in Schritt 22 hat eines der folgende Ergebnisse: Wird der Benutzer nicht akzeptiert D23, muß erneut eine Kennung eingegeben werden. Wird der Benutzer akzeptiert D24, geht das Lesegerät in den Zustand "Betriebsbereit" 20 über.

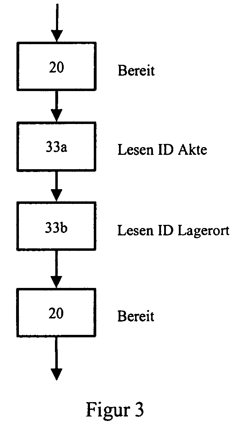

Figur 3 bis 5 zeigen die Abläufe unterschiedlicher Bedienungsweisen der Lesevorgänge bei einem Transport. Die einzelnen Aspekte des Transportes sind dabei frei kombinierbar, um ein für den Benutzer geeignetes Verfahren zur Verfügung zu stellen.

Figur 3 zeigt einen Ablauf, bei dem mit einem betriebsbereiten 20 Lesegerät in Schritt 33a zunächst eine Akten-Identifizierung und anschließend in Schritt 33b eine Lagerort-Identifizierung 33b gelesen wird. Um eine Fehlbedienung zu verhindern, wird dem Benutzer des Verfahrens vorgeschrieben, zuerst die Akten-Identifizierung 1a (kurz: a) und anschließend die Lagerort-Indentifizierung 1b (kurz: b) einzulesen. Wird der Ablauf in Figur 3 für mehrere Akten wiederholt, kann es sich bei jedem Lesevorgang 33b einer Lagerort-Identifizierung um denselben Lagerort handeln, falls mehrere Akten an denselben Ort transportiert werden. Unabhängig davon, ob es sich beim Transport mehrerer Akten nur um einen oder mehrere Lagerorte handelt, ergibt sich für den Transport mehrerer Akten eine Lesereihenfolge der Art "abababababababab". Die Ergebnisse der Lesevorgänge werden an eine Datenbank übertragen. Dort wird die Zuordnung der Akte zu dem neuen, zweiten Lagerort gespeichert. Bei dem in Figur 3 dargestellten Ablauf wird dabei jeweils eine Akte an einem neuen, zweiten Lagerort abgeliefert.

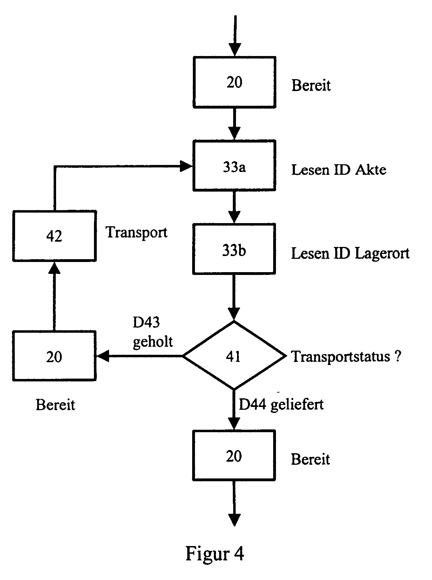

Figur 4 zeigt den bevorzugten Aspekt, die Dokumentation des Transports durch einen weiteren Lesevorgang am alten, ersten Lagerort zu erweitern. Hierzu wird der Akte während eines Transportes der Status "T" gegeben, wobei sie, so lange sie sich an einem Lagerort befindet, den Status "G" besitzt. Die Akte befindet sich zunächst am ersten Lagerort und hat den Status "G", während das Lesegerät im Zustand "Betriebsbereit" 20 ist. Analog zu Figur 3 werden die Identifizierung der Akte und des Lagerortes mit dem Lesegerät eingelesen, siehe Schritt 33a bzw. 33b. Die Daten der Lagerort- und Akten-Identifizierung werden entweder im Lesegerät gespeichert oder mit Hilfe des Datenfunk an die computergestützte Datenbank übertragen und dort gespeichert. Das Lesegerät erkennt anhand der Daten seines eigenen Speichers oder anhand einer Übermittlung der Information aus der Datenbank mit Hilfe des bidirektionalen Datenfunks, daß die Akte aktuell den Status "G" besitzt. Anhand des Status "G" der Akte wird im Rahmen einer ersten Prüfung erkannt, 41, daß die Akte abgeholt wird, D43. Das Lesegerät geht, um das nächste Paar aus Akten- und Lagerort-Identifizierung lesen zu können, in den Zustand der "Betriebsbereitschaft" 20 über und speichert den neuen Status "T" der Akte in seinem eigenen Speicher oder übermittelt die Information an die Datenbank. Die Reihenfolge der beiden Vorgänge der Änderung des Status und der Übertragung der Identifizierungen können auch invertiert werden. Nach dem Transport 42, während dessen der Status der Akte "T" ist, beginnt der oben beschriebene Vorgang des Lesens der Identifizierungen am zweiten Lagerort von neuem. Die zweite Prüfung des Status der Akte ergibt auf Grund der Daten aus dem Speicher des Lesegerätes oder auf Grund der Information aus der Datenbank das Ergebnis "T" D44. Dadurch erkennt das System, daß die Akte nun an den zweiten Lagerort ausgeliefert wird und gibt der Akte wieder den Status "G". Das Lesegerät geht in den Zustand der "Betriebsbereitschaft" 20 über, nachdem es die Daten der Identifizierungen an die Datenbank übertragen hat. Die Reihenfolge der beiden Vorgänge der Änderung des Status und der Übertragung der Identifizierungen können auch invertiert werden.

Die Tatsache, daß das Lesegerät zwischen dem Abholen einer Akte von dem alten, ersten Lagerort und der Auslieferung an den neuen, zweiten Lagerort in den Zustand der "Betriebsbereitschaft" 20 übergeht ist durch folgendes bedingt:
Der Ablauf in Figur 4 gibt den Transport einer Akte an. Um mehrere Akten gleichzeitig zu transportieren, wird der Ablauf von Figur 4 für jede Akte durchgeführt, wobei die Reihenfolge der einzelnen Abläufe zeitlich ineinander geschachtelt sein kann. Beispielsweise wird zunächst die Akte A1 und anschließend die Akte A2 abgeholt. Im Anschluß an die Auslieferung der Akte A1, jedoch noch vor der Ausliefrung der Akte A2 kann bereits eine weitere Akte A3 abgeholt werden.

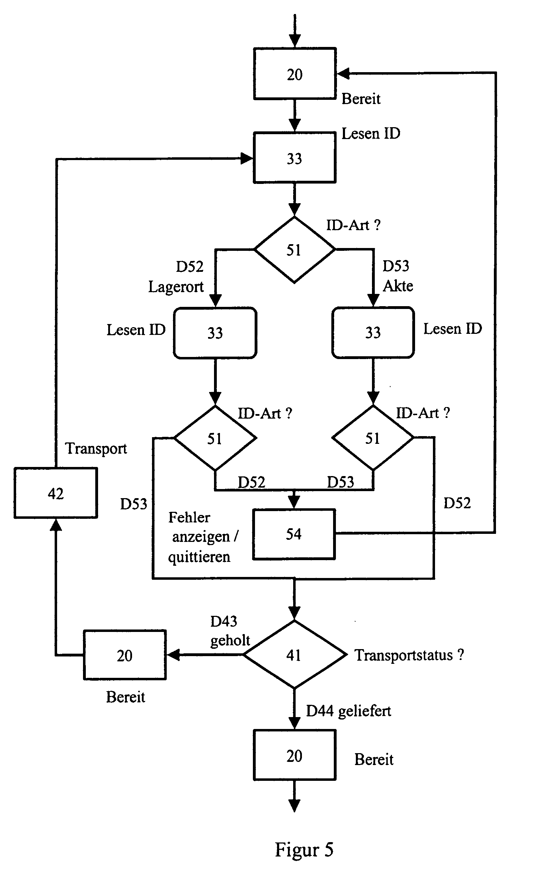

Die Abläufe von Figur 3 und 4 werden in Figur 5 durch einen weiteren bevorzugten Aspekt erweitert. Dieser Aspekt der Fehlererkennung kann mit allen Transportabläufen kombiniert werden.

In den bisher erläuterten Abläufen wurde fest vorgegeben, daß zunächst eine Akten-Identifizierung und anschließend eine Lagerort-Identifizierung eingelesen werden muß. Wird diese Reihenfolge nicht eingehalten wird von einer Fehlbedienung des Benutzers oder einem fehlerhaften Lesen bzw. Interpretieren der jeweiligen Identifizierung ausgegangen.
Um die Dokumentation der Änderung des Lagerortes der Akte in der Datenbank aufrechtzuerhalten ist es zu bevorzugen den Bediener von einem aufgetretenen Fehler zu informieren. Der Bediener kann durch eine Meldung z.B. in einer LCD-Anzeige des mobilen Lesegerätes und/oder einen Warnton in Schritt 54 auf den Fehler aufmerksam gemacht werden. Das Sicherheitskonzept des Verfahrens gibt vor, ob der Bediener in Schritt den Fehler durch eine wiederholte Eingabe korrigieren und/oder den Fehler quittieren muß, um fortfahren zu können.

Ein verbesserter Bedienungskomfort und eine Fehlererkennung kann gemäß Figur 5 dadurch erreicht werden, daß das System in Schritt 51 prüft, ob es sich beim ersten Lesevorgang 33 einer Identifizierung um einen Lagerort D52 oder eine Akte D53 handelt. Nach einem zweiten Lesevorgang 33 wird wiederum geprüft, um welche Art der Identifizierung es sich handelt. Es wird festgestellt, ob aus den beiden Prüfergebnissen eine Zuordnung aus Akte und Lagerort hergestellt werden kann. Falls diese Zuordnung möglich ist, wird analog zu dem Ablauf in Figur 4 weiterverfahren. Ansonsten gibt das System in Schritt 54 eine Fehlermeldung aus und wartet bis der Fehler quittiert ist. Ist das System hierzu in der Lage, kann eine Lesereihenfolge folgender Art zugelassen werden: "|ab|ba|ba|ab|ba|ba|ab|ab|ab|". Es spielt bei dieser Ausführung keine Rolle, welche der beiden Identifizierungen zuerst gelesen wird. Maßgeblich ist nur, daß die beiden Identifizierungen nicht von derselben Art sind. Eine Erkennung der Art der Identifizierung ist dadurch möglich, daß ein Bit der Identifizierung für eine Unterscheidung zwischen einer Akte und einem Lagerort reserviert wird.

Analog zu dem in Figur 5 erfaßten Bedienungsfehler können auch andere Fehler, wie z.B. unvollständig gelesene Identifizierungen oder Übertragungsfehler an den Computer oder in die Datenbank erkannt werden und dem Bediener die Art des Fehlers mitgeteilt werden. Für die Meldung mancher dieser Fehler ist ein bidirektionaler notwendig.

Eine weiterer Aspekt, die Lesevorgänge im Rahmen eines Transportes einer Akte betreffend, ist nicht als Figur dargestellt. Auch dieser Aspekt ist mit den anderen, oben erläuterten Aspekten kombinierbar. Ist der Anwender bereit Fehlbedienungen zu akzeptieren, können auch Lesevorgänge z.B. der Art "baaaaaaaaa" oder "aaaaaaaab" verwendet werden, bei denen mehrere Akten a jeweils einem Lagerort b zugeordnet werden. Diese Anwendung des Verfahrens ist empfindlicher gegenüber Fehlbedienungen, kann aber erforderlichenfalls den Komfort steigern.

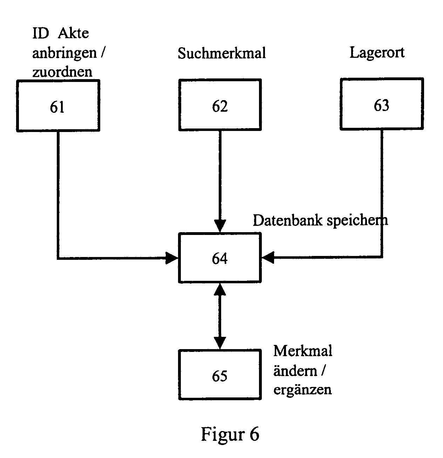

Figur 6 zeigt einen Ablauf für die Erweiterung der Datenbank. Um neue Akten in die Datenbank aufzunehmen, wird in Schritt 61 eine Identifizierung auf die Akte aufgebracht und in die Datenbank eingetragen. Weiterhin wird in Schritt 62 ein Suchmerkmal für die Akte in die Datenbank eingetragen. Das Suchmerkmal kann dabei durch einen Begriff, der die Akte beschreibt, vorgegeben werden. Für eine Suche innerhalb der Datenbank ist es aber zu bevorzugen, mehrere Stichwörter zur Suche zuzulassen. Darüber hinaus ist es möglich digitale Bilddateien bzw. durch Merkmalsextraktion aus Bilddateien gewonnene Informationen als Suchmerkmal zu verwenden.
Um die Suche nach Akten im Laufe der Zeit zu vereinfachen ist es zu bevorzugen, dem Benutzer durch Schritt 65 die Möglichkeit zu geben, die Suchmerkmale in der Datenbank zu ändern und/oder zu erweitern. Als weitere Information für das Aufnehmen einer neuen Akte in die Datenbank, muß in Schritt 63 der aktuelle Lagerort angegeben werden. Nach dem Speichern dieser Informationen in der Datenbank in Schritt 64, kann ein zukünftiger Transport der Akte erfindungsgemäß dokumentiert werden.

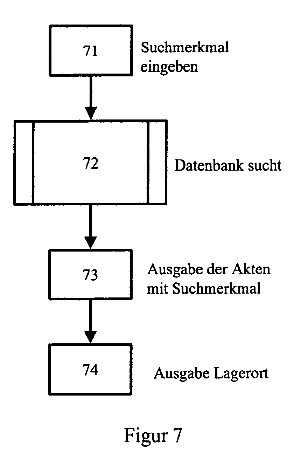

Figur 7 zeigt den Ablauf einer Suche. Zunächst wird mindestens ein Suchmerkmal in die Datenbank eingegeben 71. Die Datenbank ist in der Lage nach den Akten mit den eingegebenen Suchmerkmalen zu suchen 72. Die Suche kann dabei nach exakten Begriffen oder ähnlichen Begriffen erfolgen. Als Ergebnis zeigt die Datenbank alle Akten an 73, deren Suchmerkmale mit den eingegebenen Suchmerkmalen übereinstimmen. Dabei kann direkt der Standort aller gefundenen Akten ausgegeben werden 74, oder der Benutzer aufgefordert werden, zuvor noch die von ihm gewünschte Akte aus den von der Datenbank angegebenen Akten auszuwählen.

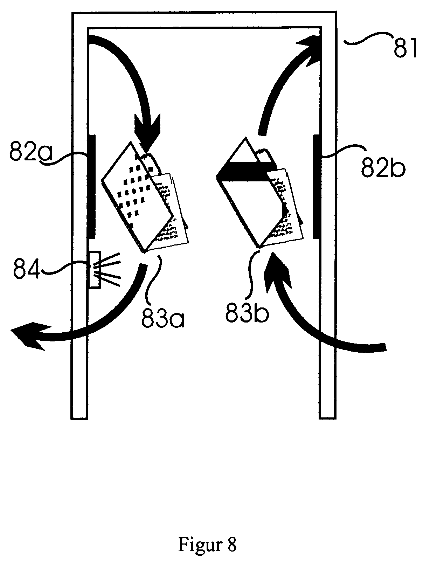

Figur 8 zeigt die Skizze einer weiteren erfindungsgemäßen Ausführungsform der computergestützten Dokumentation einer Lagerung einer Akte in einem Lagersystem. Die Lesegeräte 82a und 82b sind bei dieser Vorrichtung stationär an den Türrahmen 81 angebracht. Wird eine Akte 83a in den Raum 101 oder eine Akte 83b aus dem Raum transportiert, so erkennt das Lesegerät die Akte auf Grund einer Akten-Identifizierung, insbesondere einer Akten-Identifizierung in Form eines Transponders. Dadurch, daß das Lesegerät seinen eigenen, stationären Ort kennt, kann somit an eine computergestützte Datenbank übertragen werden, in welchen Raum oder aus welchem Raum die Akte getragen wurde.

Analog zu den bereits erläuterten Ausführungen können auch hier Fehler erkannt werden und durch eine Signalgeber 84 gemeldet werden.

Bevorzugt sind an beiden Seiten der Türe 81 die Lesegeräte 82 a/b so angebracht, daß erkannt wird, ob die Akte in den Raum 101 oder aus dem Raum transportiert wird. Diese Erkennung kann dadurch erreicht werden, daß man die Reichweite der Lesegeräte so einschränkt, daß nur eine Hälfte des Bereiches der Türe durch jeweils eines der auf unterschiedlichen Seiten angebrachtes Lesegerät abgedeckt wird. Wird dem Benutzer vorgeschrieben, daß er mit der Akte auf der rechten Seite durch die Türe gehen muß, wird erkannt, aus welcher Richtung die Akte durch die Türe getragen wurde.

Alternativ können auch zwei Lesegeräte an einer Seite versetzt angebracht sein. Durch die zeitliche Reihenfolge der Signale der versetzt angebrachten Lesegeräte kann festgestellt werden, ob die Akte in den Raum oder aus dem Raum transportiert wird. Insbesondere können die Lesegeräte dabei räumlich so ausgerichtet werden, daß bei der Detektion der zeitlichen Reihenfolge der Signale die Fehlerwahrscheinlichkeit reduziert wird. Bei dieser Form der Ausführung können die beiden Lesegeräte bevorzugt in ein Gehäuse montiert werden. Diese Ausführungsform bietet den Vorteil, daß der Benutzer nicht darauf festgelegt ist, die Akte immer auf derselben Seite mitzuführen.

Die im Zusammenhang mit den nicht stationär im Türrahmen angebrachten Lesegeräten beschriebenen Modifikationen gelten sinngemäß auch für die im Zusammenhang mit den stationär im Türrahmen angebrachten Lesegeräten.

Durch oben genannte Dokumentation des ersten und zweiten Lagerortes, die oben beschriebene Dokumentation von Benutzern, sowie die oben beschriebene Zuordnung von Zeitmarken zu den einzelnen Vorgängen können die bereits erwähnten logistischen Methoden mit all ihren Möglichkeiten ausgeschöpft werden. Es wird hierdurch nicht nur der Standort der Akte dokumentiert sondern der Weg der Akte verfolgt. Das bedeutet, es liegt im System eine quasi lückenlose Dokumentation des Verbleibs der Akte vor . Diese komplette Historie des Aktentransports kann zum Beispiel für die Verifizierung von Entscheidungen genutzt werden oder für Leistungsdaten von Transportvorgängen, sowie Rationalisierungsentscheidungen genutzt werden.

Solche detaillierten Informationen für die Dokumentation der Änderung des Lagerortes können in komplexen Verwaltungssystemen mit Transportaufträgen verknüpft werden. Ferner können komplexe Transportvorgänge in einzelne Transportglieder unterteilt werden. Jedes dieser Transportglieder wird am Anfang und am Ende durch einen Lesevorgang, bei dem bevorzugt ein Zeitstempel und eine Mitarbeiterkennung beigefügt wird, dokumentiert. Dadurch kann das Verbleiben der Akte zu jeder Zeit für jeden im System sichtbar gemacht werden. Daher können Fehler in der Änderung des Lagerortes effizient aufgedeckt werden. Darüber hinaus kann auch ein komplexes Netzwerk aus Lagerorten, mit den bereits erwähnten Hierarchien, sowie der bereits erwähnten Zusammenfassung von Akten in übergeordnete Systeme, transparent gestaltet werden.

Die einzelnen Transportglieder können zu einer Transportkette verbunden werden. Diese Transportkette bildet den gesamten Transportvorgang vom Entfernen der Akte am ersten Lagerort bis zur neuen Verknüpfung der Akte mit dem zweiten Lagerort.

Durch die oben beschriebenen logistischen Methoden wird die einfache Speicherung des aktuellen Standorts mit den zuvor erwähnten Schritten zu einem Führungswerkzeug für die Akten. Dabei wird durch die oben beschriebene Einbindung der Mitarbeiter erreicht, dass ein komplettes Aktenmanagementsystem zur Verfügung gestellt wird.

Mit den bereits erwähnten Merkmalen und Methodenschritten können im Rahmen des Aktenmanagementsystems auch der Einsatz der Mitarbeiter effizient geplant werden. Dies kann unter anderem dadurch erreicht werden, dass die Anmeldung eines Mitarbeiters am Lesegerät erfolg. Das System kann somit auf die Informationen, welcher Mitarbeiter an welchem Lesegerät angemeldet ist, zurückgreifen. Hierdurch wird die Steuerung eines rationellen Einsatzes von Mitarbeitern in komplexen Aktenmanagementsystemen möglich.

Darüber hinaus ist es über die verschiedenen Kontaktpunkte des Datenfunksystems zum Computer, der die Dokumentation der Änderung des Lagerortes einer Akte vornimmt, möglich, den Aufenthaltsort des Lesegeräts innerhalb des Lagersystems zumindest ungefähr zuzuordnen. Auch diese Informationen können für eine effektive Transportplanung genutzt werden.

Die umfangreiche Möglichkeit aktenspezifische Suchmerkmale für die Suche in der Datenbank zu verwenden, bietet, neben der komfortablen Begriffseingabe bei der Abfrage von Akten, darüber hinaus den Vorteil, dass eine Verknüpfungen des Aktenmanagementsystems mit anderen eine Akte betreffenden Vorgängen vorgenommen werden kann. Eines der möglichen Suchmerkmale kann hierzu mit anderen Datenbanken verknüpft werden, wodurch die Möglichkeit der Anbindung an z.B. ein elektronisches Dokumenten-Management-System oder ein Fristen-Kontrollsystem besteht.

## Patentansprüche

1. Vorrichtung zur computergestützen Dokumentation einer Änderung eines Lagerortes (101-104) einer Akte (3) in einem Lagersystem, mit
maschinell lesbaren Akten-Identifizierungen (1a), die an den im Lagersystem vorhandenen Akten (3) angebracht sind,
maschinell lesbaren Lagerort-Identifizierungen (1b), die mindestens zwei
Lagerorte (101-104) kennzeichnen,
mindestens einem Lesegeräte (5), zum Lesen der Akten- oder der Lagerort-Identifizierungen,
einer Vorrichtung zum Datenfunk (7), welche die Akten-Identifizierungen und
Lagerort-Identifizierungen an einen Computer überträgt,
einer CPU-gestützen Datenbank, in der die von dem Lesegerät übertragenen
Daten gespeichert werden und eine Zuordnung der Akte zu dem Lagerort vorgenommen wird.

2. Vorrichtung nach Anspruch 1, wobei das Lesegerät (5) mobil ist.

3. Vorrichtung nach einem der vorstehenden Ansprüche, wobei das Lesegerät (5) anhand einer Benutzer- Identifizierungen den Benutzer erkennt.

4. Vorrichtung nach einem der vorstehenden Ansprüche, wobei das Lesegerät (5) und/oder der Computer den Akten-Identifizierungen (1a) und/oder Lagerort-Identifizierungen (1b) Zeitcodes beifügt.

5. Vorrichtung nach einem der vorstehenden Ansprüche, wobei das Lesegerät (5) in Verbindung mit der Datenbank anhand der Indentifizierungen der Akten (3), der Lagerorte (101-104) und/oder des Benutzers des Lesegerätes einen Transportvorgang erkennt und die Daten des Transports an die Datenbank überträgt.

6. Vorrichtung nach einem der vorstehenden Ansprüche, wobei das Lesegerät (5) und/oder der Computer unterschiedliche Fehler erkennt und fehlerspezifische Meldungen generiert.

7. Vorrichtung nach einem der vorstehenden Ansprüche, wobei der Datenfunk (7) bidirektional ist.

8. Vorrichtung nach einem der vorstehenden Ansprüche, wobei in der Datenbank eine Hierarchie, die durch einen mindestens zweistufigen Detaillierungsgrad der Lagerorte (101-104) aufgebaut ist, gespeichert wird.

9. Vorrichtung nach einem der vorstehenden Ansprüche, wobei die Datenbank aktenspezifische Suchmerkmale speichert.

10. Vorrichtung zur computergestützten Dokumentation einer Änderung eines Lagerortes (101-104) einer Akte (3) in einem Lagersystem, mit
maschinell lesbaren Akten-Identifizierungen (1a), die an den im Lagersystem vorhandenen Akten (3) angebracht sind,
mindestens einem Lesegerät (5), das stationär an einem Raum (101) angebracht ist, so daß beim Transport der Akte (3) in den Raum (101) und/oder aus dem Raum (101) die Akte (3) anhand der Akten-Identifizierung (1a) erkannt wird und
die Identifizierung an einen Computer übertragen wird,
eine CPU-gestützte Datenbank, in der die von dem Lesegerät (5) übertragenen
Daten gespeichert werden, und eine Zuordnung der Akte (3) zu dem Lagerort (101) vorgenommen wird.

11. Vorrichtung nach Anspruch 10, wobei das Lesegerät (5) erkennt, ob die Akte (3) in den Raum (101) oder aus dem Raum transportiert wird.

12. Vorrichtung nach einem der Ansprüche 10 bis 11, unter Einbezug der Merkmale aus den Ansprüchen 2 bis 9.

13. Verfahren zur computergestützten Dokumentation einer Änderung eines Lagerortes einer Akte (3) in einem Lagersystem, wobei
a) ein Transport der Akte von einem ersten zu einem zweiten Lagerort (101-104) durchgeführt wird,
b) eine Lagerort-Identifizierung (1b) des zweiten Lagerorts mit einem Lesegerät (5) eingelesen wird,
c) eine Akten-Identifizierung (1a) der Akte mit dem Lesegerät eingelesen wird,
d) die Lagerort-Identifizierung und die Akten-Identifizierung mit dem Lesegerät mittels Datenfunk (7) in eine computergestützte Datenbank übertragen wird,
e) eine Zuordnung der Akte zu dem zweiten Lagerort in der Datenbank erzeugt wird.

14. Verfahren nach Anspruch 13, wobei ein mobiles Lesegerät verwendet wird.

15. Verfahren nach einem der Ansprüche 13 bis 14, wobei das Verlassen des ersten Lagerorts (101-104) dokumentiert wird, indem
f) die Lagerort-Identifizierung (1b) des ersten Lagerorts mit dem Lesegerät (5) eingelesen wird,
g) die Akten-Identifizierung (1a) der Akte (3) mit dem Lesegerät eingelesen wird.

16. Verfahren nach einem der Ansprüche 13 bis 15, wobei das Lesegerät (5) durch eine Benutzer-Identifizierung einen Benutzer erkennt.

17. Verfahren nach einem der Ansprüche 13 bis 16, wobei das Lesegerät (5) und/oder der Computer beim Einlesen der Akten-Identifizierung (1a) und/oder der Lagerort-Identifizierung (1b) und/oder der Benutzer-Identifizierung einen Zeitcode beifügt.

18. Verfahren nach Anspruch 16 oder 17, wobei der Transportvorgang der Akte (3) erkannt wird und anhand der Zeitcodes der Akten-Identifizierung und/oder der Lagerort-Identifizierungen und/oder des Benutzers die Daten des Transportes in die Datenbank eingetragen werden.

19. Verfahren nach einem der vorstehenden Ansprüche, wobei das Lesegerät (5) einen Fehler erkennt, wenn durch ein fehlerhaftes Einlesen einer Identifizierung die Akte nicht einem Lagerort zugewiesen werden kann.

20. Verfahren nach Anspruch 19, wobei das Lesegerät (5) nach dem Erkennen des Fehlers ein fehlerspezifisches Signal ausgibt und/oder eine fehlerspezifische Meldung anzeigt.

21. Verfahren nach Anspruch 19 oder 20, wobei das Lesegerät (5) nach dem Fehler weitere Arbeiten mit dem Lesegerät erst nach einer Korrektur und/oder Quittierung der Fehleingabe zuläßt.

22. Verfahren nach einem der vorstehenden Ansprüche, wobei der Datenfunk (7) des Lesegeräts (5) bidirektional ist.

23. Verfahren nach einem der Ansprüche 13 bis 22, wobei der Lagerort (101-104) anhand einer Hierarchie durch einen mindestens zweistufigen Detailierungsgrad beschrieben wird

24. Verfahren nach Anspruch 23, wobei die Datenbank den unterschiedlichen Detaillierungsgrad für den Lagerort berücksichtigt und redundante Informationen verarbeitet.

25. Verfahren zur Registrierung der Akte nach einem der Ansprüche 13 bis 24, wobei
a) der Akte (3) die Akten-Identifizierung (1a) zugewiesen wird, indem die Akten-Identifizierung in die Datenbank eingetragen wird und die Akte mit der Akten-Identifizierung **gekennzeichnet** wird,
b) in der Datenbank zu der Akte (3) ein Suchmerkmal abgelegt wird,
c) die Zuordnung der Akte zu dem Lagerort (101-104) in der Datenbank erzeugt wird.

26. Verfahren nach Anspruch 25, wobei das Suchmerkmal in der Datenbank erweiterbar ist.

27. Verfahren zur Feststellung des Lagerorts (101-104) der Akte (3) nach Anspruch 25 oder 26, wobei in der Datenbank nach der Akte anhand von Suchmerkmalen gesucht wird, im Falle eines nicht eindeutigen Suchmerkmal eine Auswahl der auf die Suchmerkmale zutreffenden Akten getroffen wird und deren Lagerort (101-104) als Ergebnis der Suche angezeigt wird.

28. Ein Computer Programm, mit einem Programmcode zum Ausführen der Schritte einer der Ansprüche 13 bis 27, wenn das Programm auf einem Computer läuft.

29. Ein Computer Programm, gespeichert auf einem computerlesbaren Medium, zum Ausführen eines der Verfahren nach einem der Ansprüche 13 bis 27.

30. Ein computerlesbares Medium, auf dem Programmcode eines Computer Programms zur Ausführung eines der Verfahren nach einem der Ansprüche 13 bis 27 gespeichert ist.
